(19) Europäisches Patentamt
European Patent Office
Office européen des brevets

(11) **EP 1 271 455 A1**

(12) **EUROPEAN PATENT APPLICATION**

(43) Date of publication:
**02.01.2003 Bulletin 2003/01**

(51) Int Cl.⁷: $G09F\ 3/10$, $B29B\ 17/00$

(21) Application number: **02013839.2**

(22) Date of filing: **21.06.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **21.06.2001 JP 2001188517**

(71) Applicant: **CANON KABUSHIKI KAISHA Ohta-ku, Tokyo (JP)**

(72) Inventor: **Koike, Yasushi, c/o Canon Kabushiki Kaisha Ohta-ku, Tokyo (JP)**

(74) Representative: **Weser, Wolfgang, Dr. Dipl.-Phys. Weser & Kollegen, Patentanwälte, Radeckestrasse 43 81245 München (DE)**

(54) **Method for recycling plastic material**

(57) In reprocessed plastic material utilizing as a raw material thermoplastic molded part (12), a compatible sheet material (15) being stuck thereon, the weight of the sheet material (15) is made 0.5% or less of that of the molded part, and further the Izod impact strength and the melt flow rate of the reprocessed material are made, respectively, 80% or more and 120% or less of those of the virgin material. Thereby, good quality reprocessed plastic material with less degradation in physical properties and color relative to the virgin material is provided without adding a step other than a usually conducted recycling step, for recycling of a thermoplastic, a compatible label being stuck thereon.

FIG.1

EP 1 271 455 A1

**Description**

The present invention relates to reprocessed plastic material utilizing used thermoplastic product as raw material, to electrical and electronic equipment utilizing this reprocessed plastic material, to a process for manufacturing reprocessed plastic material, and to a method for recycling plastic material.

Recently, a movement toward recycling, reutilization, etc. of petrochemicals as well as conventionally recycled metal materials has been enhanced as environmental protection sensitivity rises. Even in Japan alone, "Waste Disposal and Public Cleaning Law" (Law No. 137, 1970, commonly called "Waste Disposal Law"), "Law for Promotion of Utilization of Recycled Resources" (Law No. 48, 1991, commonly called "Recycling Law"), "Law for Separation Collection Concerning Containers and Packaging and Promotion of Re-commercialization, etc." (Law No. 112, 1995, commonly called "Containers and Packaging Recycling Law"), "Law for Re-commercialization of Specified Household Apparatuses" (Law No. 97, 1998, commonly called "Household Apparatuses Recycling Law"), etc. came into operation. As these laws have been established, recycling of thermoplastics have been accelerating in some kinds of product groups of large domestic electrical equipment, automobiles, etc.

However, most of this recycling was primarily thermal recycling that utilizes thermoplastics as a source, or recycling for cascade utilization in which degradation in physical properties of recycled thermoplastics was not so particular about. For this reason, while electrical and electronic equipment contains a lot of thermoplastics, no attention was paid, upon the manufacture of electrical and electronic equipment, to make easy the separation of thermoplastics contained therein after use. As a result, a variety of contaminants were contained in thermoplastics of electrical and electronic equipment, which are targets of recycling, and thus reprocessed thermoplastics that can be utilized for products or parts similar to original ones was not able to be obtained.

In addition, when electrical and electronic equipment or parts were produced using recycled thermoplastic material, most of it was utilized for packing containers or packing material. Thus, electrical and electronic equipment or electrical and electric parts similar to original ones were never completely composed of reprocessed plastic material. In particular, for parts on which labels on which operating descriptions of equipment are printed are stuck, only washing cannot remove matrixes of stuck labels or adhesive, and so adhesive remaining after washing must be removed with a cutter, which increases recycling cost.

Recycling techniques of materials on which labels are stuck are disclosed through Japanese Patent No. 3057472, Japanese Patent Application Laid-open No. 12-37927 (2000), etc. Further, techniques concerning thermoplastic material and compatible labels are disclosed through Japanese Patent Application Laid-open Nos. 9-244534 (1997) and 11-237840 (1999), etc.

Japanese Patent Application Laid-open No. 11-134867 (1999) was disclosed by the present applicant, wherein the applicant disclosed various techniques such as recycling processes for reprocessed plastic material, the raw materials of which are thermoplastic products, reprocessed plastic material, and the like. The description of the aforementioned patent depicts the necessity of the physical properties of reprocessed plastic material being within allowable levels in order to utilize the reprocessed plastic material as material equivalent to the virgin material, and discloses a process for necessary recycling treatment. In this case, the patent takes into account the color degradation of reprocessed plastic material due to ink used on labels and shows the need for comprehensive judgement on recycling of plastic material.

On the other hand, Japanese Patent Application Laid-open No. 9-244534 (1997) does not disclose specified data of physical properties of recycled plastic material, the definition of recycling, or the reason of excellence of recycling.

Japanese Patent Application Laid-open No. 11-237840 (1999) discloses information about values of physical properties of reprocessed plastic material, but does not disclose information on color degradation due to printing ink.

Oppositely, Japanese Patent No. 3057472 and Japanese Patent Application Laid-open No. 12-37927 (2000) disclose techniques for improving appearances and qualities on the precondition that compatible labels are used, but do not disclose degradation of physical properties of recycled plastic material. As a result, whether or not reprocessed plastic material can be used for the purpose of its original usage cannot be judged. In other words, the aforementioned prior art does not show specific measures or effects of recycling thermoplastic parts for the use of original parts as adherends.

As with considering the physical properties of material, ensuring physical properties of material equivalent to its virgin material is important even in recycled material in order to extend applications of reprocessed plastics even in the area of recycling of thermoplastic material, which was primarily used for cascade so far. However, assurance of the levels of physical properties increases factors relating to cost such as control of the amount of an additive fed and polymer separation expenditure when additives are incorporated and polymers are separated in a recycling process as in the case of the aforementioned techniques, and so the substitution of recycled material for virgin material was delayed.

In addition, linear patterns including black streaks or silver streaks are formed in some cases on the surfaces of molded product as characteristics of thermoplastic resins because of the effect of heat added during molding. These are mainly attributable to molding conditions and, when foreign matter is mixed in material itself, black spots appear on the surfaces.

Sheet materials made of compatible thermoplastics are the same as adherends in resin material; however, the labels directly become foreign matter in some cases during recycling. Moreover, dust, dirt, foreign matter, or the like adheres to the surfaces of parts during use of products, recovery or disassembling operation. Thermoplastic material used in such products is allowed to generate more foreign matter than the virgin material without sufficient washing and removal of foreign matter, when it is used as recycling material. This raised the possibility of spoiling the values of product particularly in exterior parts of electrical and electronic equipment.

Therefore, an object of the present invention is to provide good quality reprocessed plastic material with little degradation in the values of physical properties with respect to the virgin material, in thermoplastics having been used in used products to be recycled, without the addition of steps besides usual recycling steps such as steps of crushing, washing and removing of washings, drying, and removing of metals and foreign matter, which are normally carried out.

Another object of the present invention is to provide electrical and electronic equipment using the aforementioned reprocessed plastic material.

A further object of the present invention is to provide a process for recycling plastic material.

Yet a further object of the present invention is to provide a process for manufacturing reprocessed plastic material.

In order to achieve the aforementioned objects, a first embodiment of the present invention is reprocessed plastic material that uses thermoplastic molded parts as raw material, the aforementioned thermoplastic molded parts being reprocessed plastic material to which thermoplastics constituting the molded parts and sheets made of compatible thermoplastics are stuck.

A second embodiment of the present invention is material, in the aforementioned first embodiment, which is produced by a process that entails crushing thermoplastic molded parts of the aforementioned raw material, which are then washed, drying the resulting material after removal of washings, and removing solid matter other than the aforementioned thermoplastics, of the crushed material.

The first and second embodiments of the present invention described above does not need the step of removing labels in the recycling step of reprocessed plastic material, and simplifies the recycling step and prevents the degradation of physical properties and colors of obtained reprocessed plastic material because of the absence of adherence of paints used in, for example, silk-screen printing as well.

Preferably, reprocessed plastic material according to the first or second embodiments of the present invention is 80% or more of the virgin material of the reprocessed plastic material in Izod impact strength and 120% or less in melt flow rate.

In a variety of the values of physical properties that indicate diverse material characteristics of thermoplastic resins, the Izod impact value shows the impact strength of a material and is used to evaluate properties of impact resistance, brittleness, toughness, etc. As a material degrades to become brittle, the Izod impact value decreases. In addition, the melt flow rate (hereinafter called the "MFR" ) is a measure of flowability during melting of a thermoplastic. As the numerical value increases, so does the flowability and the molecular weight of the resin tends to be smaller. When a material deteriorates, the molecular weight may decrease and thus the MFR becomes larger.

Every value of physical properties has a deviation even in a virgin material, and deviations of the Izod impact value and the MFR are said to be both about ±30%. This range is the case for a grade of a material, the color of which can be selected from a plurality of colors. A coloring agent used for coloring comprises pigments, dyes, a dispersion agent, a stabilizer, etc. Each grade and formulation are different from each color. Hence, selecting a color may diminish the deviations of the Izod impact value and the MFR to about ±25%.

Furthermore, reprocessed plastic material may deviate in the values of physical properties for every batch highly dependent on the conditions of recovered products to be raw material. When a batch is considered, a deviation within the batch is expected to be slightly larger than that of the virgin material.

Therefore, in order for the performance of reprocessed plastic material to be made equivalent to that of the virgin material, the values of physical properties need to be more severely controlled. The deviations of both the Izod impact value and the MFR are preferably controlled within ±20%. As mentioned above, as a material degrades, the Izod impact value becomes small and the MFR becomes large. That is, reprocessed plastic material needs to be controlled within -20% for the Izod impact value and within +20% for the MFR.

In the recycling step, confining the Izod impact value and the MFR, which are very likely to vary toward deterioration, within the aforementioned ranges permits the quality of reprocessed plastic material to be almost equal to that of the virgin material.

In addition to reprocessed plastic material according to the first or second embodiment of the present invention, the virgin material of thermoplastics prior to mold processing may be used as raw material as well.

If the values of basic physical properties are kept within the ranges of deviations of those of the virgin material, variation of the mixing ratio allows a stable supply of reprocessed plastic material, even when the amount of recovery of thermoplastics to be raw material or reprocessed plastic material is varied.

In reprocessed plastic material according to the first or second embodiment of the present invention, thermoplastics may be an acrylonitrile butadiene styrene resin (ABS resin), a polystyrene resin (PS resin), or a polypropylene resin (PP resin).

An ABS resin and a PS resin are both so called styrene-based polymers. An ABS resin is a copolymer of styrene ($CH_2=CHC_6H_5$), acrylonitrile ($CH_2=CHCN$) and butadiene ($CH_2=CHCH=CH_2$). A PS resin is a polymer of styrene ($CH_2=CHC_6H_5$) itself. Other styrene-based resin include an AS resin, which is a copolymer of styrene and acrylonitrile.

A PS resin is relatively low in mechanical strength, particularly inferior in impact resistance. To improve this, mixing of an elastic body such as butadiene rubber yields high impact polystyrene (HIPS). On the other hand, a PS resin is very high in electric insulation and also excellent in thermal stability and flowability during melting, and thus good in moldability as well.

An ABS resin is produced by adding acrylonitrile to a PS resin for improving chemical resistance and thermal resistance without losing the properties of a PS resin and further by adding butadiene for improving impact resistance.

A PS resin belonging to styrene-based polymers and also noting its polymer composition, a PS resin is recycled in the same way as that for an ABS resin.

In reprocessed plastic material according to the first or second embodiment of the present invention, the weight of a sheet material of the aforementioned thermoplastics is desirably 0.5% or less of that of the aforementioned thermoplastic molded parts. Further, in the surface of the sheet material, the ratio of the total inked surface area, the ink being used for printing, to the total surface area of the sheet material is arbitrary.

When thermoplastic parts are generally recycled, the same materials are compatible with each other and can be recycled to a thermoplastic with the same material again. However, for the aforementioned compatible sheet material, the whole sheet cannot be necessarily regarded as the same material even though the base material itself is the same because of the effects of an adhesive stuck to thermoplastic parts to be adherends, a glue used for binding a label base material and a coat material, etc. Thus, when reprocessed plastic material, the raw material of which is thermoplastic molded parts to which a compatible thermoplastic sheet material is stuck, is recycled, the weight ratio of the compatible sheet material to be stuck to the thermoplastic molded parts needs to be controlled.

In addition, used thermoplastic parts to be reprocessed are sometimes made to have a specified ratio of the total inked surface area, the ink being used for printing, to the total surface area of the sheet material, in the surface of the sheet material to be stuck, considering the degradation of color of material subsequent to recycling. However, when compatibility is discussed, reprocessed plastic material has no applications when the physical properties have been deteriorated before color degradation. When taking into account these, control of the ratio of the total inked surface area in a sheet material to be stuck to the total surface area of the sheet material is not significant, but control of the weight ratio of a compatible sheet material stuck to thermoplastic molded parts of adherends is important. According to findings by the present inventors, in reprocessed plastic material not inferior in physical properties to the virgin material, degradation in physical properties of recycled material can be prevented by controlling to be 0.5% or less the weight ratio of a compatible sheet material stuck to thermoplastic molded parts of adherends. Even though the whole surface of a sheet material is printed in ink, degradation in color does not take place.

A third embodiment of the present invention is electrical and electronic equipment formed using the aforementioned reprocessed plastic material.

According to the present invention, use of reprocessed plastic material of the present invention for electrical and electronic equipment, the number of shipping of which has recently been increasing, can increase the prevalence of the reprocessed plastic material.

Electrical and electronic equipment according to the third embodiment of the present invention includes exterior parts of the electrical and electronic equipment as electrical and electronic equipment formed from reprocessed plastic material.

In particular, applicability of the present invention to exterior parts, the finished product of which have severe specifications, not only maintains the values of physical properties of material, but also prevents a decrease in the value of appearance as a commodity even if reprocessed plastic material is utilized, and thereby greatly extends applications of recycled material. In addition, reprocessed material is ideally recycled to its original product or parts in terms of the basis of material recycling and desirably to similar electrical and electronic equipment again.

A fourth embodiment of the present invention is a process for recycling plastic material, which involves the steps of crushing, washing, drying and foreign-matter removing the raw material of used plastic molded parts formed by sticking a compatible thermoplastic sheet material on molded parts molded in plastic material to thereby yield reprocessed plastic material, and the control of the Izod impact strength of the aforementioned reprocessed plastic material being within a specified range with respect to the Izod impact strength of the virgin material of the reprocessed plastic material.

A fifth embodiment of the present invention is a process for manufacturing reprocessed plastic material, wherein in the raw material of thermoplastic molded parts formed by sticking a thermoplastic sheet material compatible with the plastic material of the main body of thermoplastic molded parts on the main body of thermoplastic molded parts, the process comprises the continuous steps of crushing the raw material parts using a mesh screen of 4 mm to 10 mm, washing the crushed material crushed in the crushing step using water as a cleaning fluid in the ratio of the crushed material to the cleaning fluid being 1 part to 10 parts or more, dehydrating the crushed material washed in the washing step by means of a centrifugal dehydration method to thereby make 0.30 wt% or less the water content of the aforementioned crushed material, removing foam with a bulk density difference of 0.5 or more from the crushed material subsequent to the aforementioned dehydration by means of air classification, removing solid matter with a true density difference of 0.5 or more by specific gravity separation, removing metals from the aforementioned crushed material using a magnet with a residual magnetism of 1 tesla or larger as a first metal removing step, and further removing metals from the aforementioned crushed material using a metal detection removal apparatus as a second metal removing step, in the sequence described above to obtain reprocessed raw material, as well as the steps of sufficiently mixing the reprocessed raw material, recycling this mixed raw material to be reprocessed by melting and kneading by an extruder to yield reprocessed material, and making the reprocessed material pellets, in the order described above, to thereby provide reprocessed plastic pellets.

When thermoplastic parts are crushed, the parts are crushed by a crusher of high revolution using a mesh screen of 4 to 10 mm, and plastic fine powder, metal powder and dust of 2 mm or less are preferably eliminated using a vibrational sieve.

Use of a mesh screen of 4 mm or less during crushing increases the amount of fine powder, which in turn increases loss during washing and drying, resulting in a bad yield. To the contrary, when a screen of 10 mm or more is used, the size of crushed material becomes too large, which is likely to cause clogging, etc. in subsequent handling, leading to a decrease in workability.

In the washing step, the weight ratio of cleaning fluid to crushed material of thermoplastic parts is preferably 10 or more. When the supply ratio of cleaning fluid to the thermoplastic crushed material becomes smaller than the case described above, the probability of mutual overlapping of the thermoplastic crushed material to be washed rises, which lowers the cleaning effect, causing an uncertain removal of the washings in the next step.

Removal of washings from crushed material of thermoplastics after washing is carried out by a centrifugal removing method and the final water content of the crushed material is made to be preferably 0.30% or less by weight. A water content of 0.30% by weight or more raises the possibility of sticking flaky crushed material of thermoplastics to each other, which produces bad effects in easily hydrolyzable thermoplastics. In addition, this washing method shortens washing time as compared with a filtering method using a filter, etc., which prevents degradation in color of the final reprocessed plastic material.

The bulk density difference between a thermoplastic and a solid material to be separated by air classification is preferably 0.5 or more and similarly the true density difference between a thermoplastic and a solid material to be separated by specific gravity separation is preferably 0.5 or more.

The bulk density refers to a density that includes air pores opening to the atmosphere and air pores enclosed in the interior in the polycrystalline body, powder layer and molded body. The true density refers to a density of a solid itself exclusive of air pores.

Air classification will be described using an example of parts of an ink jet printer as target thermoplastic parts. Air classification is not effective when conducted prior to the washing step due to hardly generating a bulk density difference by the effect of adhering ink, or when set before the drying step due to hardly generating a bulk density difference. To easily produce a bulk density difference, the air classifying step is placed subsequent to the crushing, washing and drying steps. Additionally, a bulk density difference of 0.5 or less not only decreases the precision of precise separation, but also lowers the yield of the recycling step. Paper powder remaining after the previous washing step can be separated and removed by this air classification.

Ceramics, metal oxides, and the like of large true density differences relative to thermoplastics are separated by settling in cleaning fluids such as water. A true density difference of 0.5 or less diminishes the efficiency of separation of these to decrease the yield of the recycling step.

Magnetic separation preferably utilizes a magnet with a residual magnetism of 1 tesla or larger. Magnetic separation is well suited for ferromagnetic metals and a magnet with a residual magnetism of less than 1 tesla lowers the degree of capture of ferromagnetics.

For metals other than ferromagnetics, which cannot be separated by magnetic force, metal separation utilizing eddy current is preferably used.

The above and other objects, effects, features and advantages of the present invention will become more apparent from the following description of embodiments thereof taken in conjunction with the accompanying drawings.

FIG. 1 is a perspective view showing the appearance of an ink jet printer targeted by the present invention;
FIG. 2 is a perspective view showing the state when the operating cover of the ink jet printer shown in FIG. 1;
FIG. 3 shows the front view of a part enlarged, which is extracted from the cover case shown in FIG. 2;
FIG. 4 shows a schematic view illustrating an example of a system for manufacturing reprocessed plastic material according to the present invention;
FIG. 5 shows a sectional view indicating the structure of a washing tank incorporated into the manufacturing system of FIG. 4; and

FIG. 6 shows the values of physical properties in Examples and Comparative Examples.

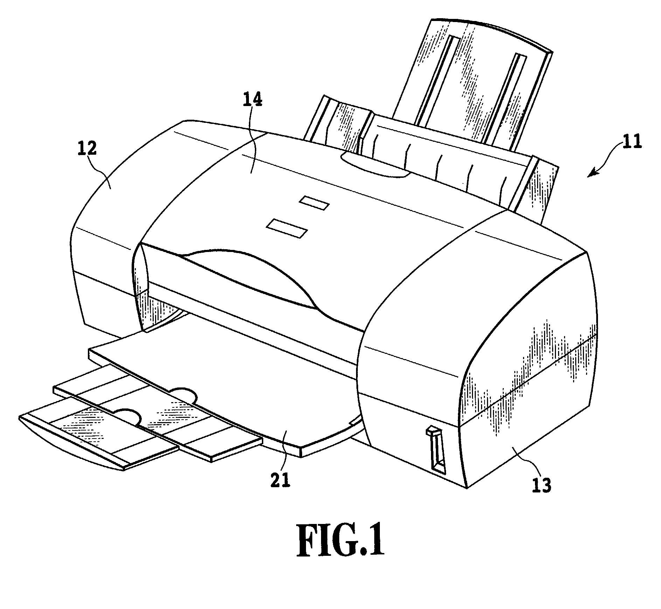

Referring to FIGS. 1 to 6, an embodiment targeted for an ink jet printer will be described in detail as reprocessed plastic material and electrical and electronic equipment according to the present invention. In addition, the present invention is not limited to the embodiment and can be applied to other techniques that should be included in the ideas of the present invention described in the claims of this patent.

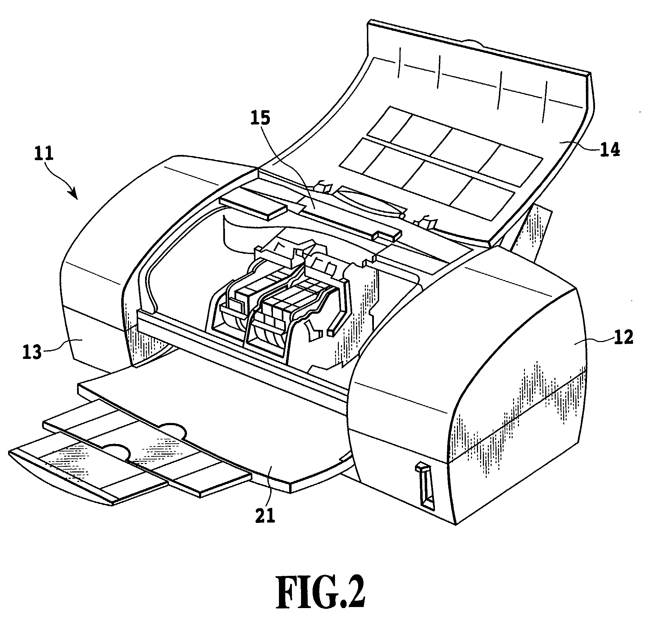

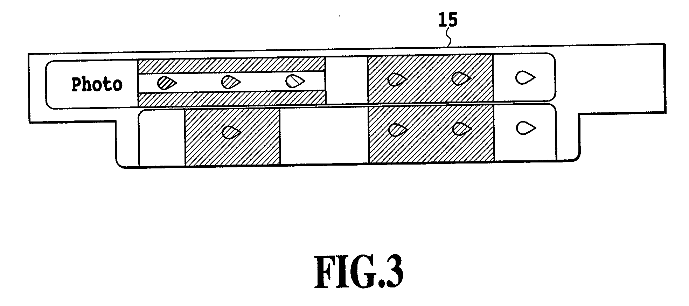

FIG. 1 shows an external view of an ink jet printer. The ink jet printer 11 in the present embodiment comprises a cover case 12 and a lower case 13; the central part of the cover case 12 is equipped with a reclosable operating cover 14, which allows the operation of the mechanism part inside the cover case 12. This operating cover 14, as shown in FIG. 2, is made to be able to keep open with respect to the upper cover 12. As shown in FIG. 2, on the top face of the central part of the cover case 12 when the operating cover 14 is kept open, as illustrated in FIG. 3 showing the extracted and enlarged top face, a label 15 is stuck that indicates the alignment order of the ink tanks of an ink jet recording head to be placed in this ink jet printer and to be used. The cover case 12 including the stuck label 15 is selected as raw material of reprocessed plastic material in the embodiment.

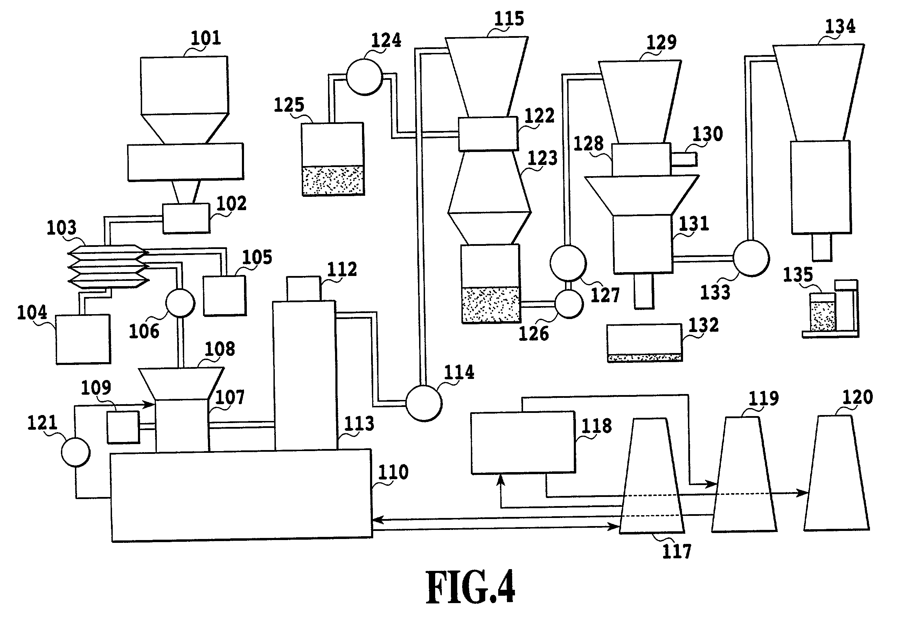

FIG. 4 is a brief block diagram of a recycling system in the embodiment. Namely, raw material to be reprocessed plastic material is crushed by a crusher 101 into a specified size. The crushed raw material is transported by a specified amount via a transporting apparatus 102 to a vibrational sieve 103 and then classified. Fine powder, which produces troubles such as clogging in later operation, is discharged into a waste tank 104; a recovery tank 105 recovers insufficiently crushed raw material, which is returned to the crusher 101. On the other hand, raw material that is crushed in a specified size is made to pass through a magnetic separator 106 for the capture of ferromagnetic metals contained in the raw material and then supplied to a hopper 108 of a screw feeder 107. The screw feeder 107 is driven by a motor 109 and supplies the raw material by a specified amount into a cleaning fluid tank 110.

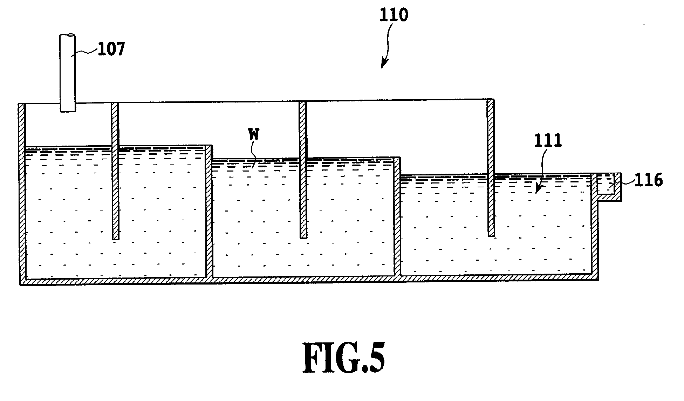

FIG. 5 shows a brief structure of the cleaning fluid tank 110 used in the embodiment. That is, the cleaning fluid tank 110 in the embodiment is separated into a plurality of sections and separates plastics to be recycled raw material from foreign matter by utilizing the differences of specific gravities between metals and foreign matter. Raw material flowing into the final bath 111 of this cleaning fluid tank 110 is dehydrated by a washing dehydrating apparatus 113 driven by a motor 112 and then is supplied to a cyclone 115 via an air blower 114.

Cleaning fluid W flooding from the floodgate 116 of the cleaning fluid tank 110 is conveyed from a buffer tank 117 to a distillation concentration apparatus 118, wherein the washings are purified. Purified cleaning fluid is supplied to a condensed fluid tank 119 and then is returned to the cleaning fluid tank 110 again. In addition, concentrated colored residual fluids such as ink is discharged by the distillation concentration apparatus 118 into a concentrated fluid tank 120.

Additionally, part of the cleaning fluid W overflowed from the floodgate 116 is transported through a filter 121 into the screw feeder 107, wherein it is utilized as the lubricant when raw material is conveyed.

Raw material supplied to the aforementioned cyclone 115 is air classified therein and fed by a specified amount by means of a rotary valve 122 to the side of an aspirator 123. At this time, a foamed polyurethane resin or the like with a bulk density smaller than that of the raw material to be reprocessed plastic material is discharged by a blower 124 into a recovery tank 125.

In addition, material with metal powder, or the like of raw material flowed down from the aspirator 123 is passed through a magnetic separator 126 again and collected and separated, and then is supplied via an air blower 127 to a stock tank 129 of a screw feeder 128. Then, the material is conveyed by a specified amount via the screw feeder 128 driven by a motor 130 using eddy current, etc. to a metal separating apparatus 131 for separating metals from raw material, whereby metal powder, or the like contained in the raw material is separated and the separated metal powder is discharged into a recovery tank 132.

The raw material whose stuck metals was removed by the metal separating apparatus 131 is fed into a hopper 134 by a blower 133 and finally recovered into a recovery container 135 as plastic material to be reprocessed.

Embodiment

An ink jet printer as illustrated in FIG. 1 (BJ F600, Canon Inc.) was selected as a target of the present invention. In other words, used product of that kind of printers were utilized as raw materials and printer cases of that kind were manufactured using reprocessed material.

The cover case 12 (material: ABS resin, average thickness: 2.0 mm, true density: 1.05) of an ink jet printer as shown in FIG. 1 was targeted. About 7.8 kg of raw material was collected from the raw material source of the cover case 12 on which a label is stuck, the label indicating the alignment order of the ink tanks of an ink jet recording head to be mounted in this ink jet printer and to be used, as shown in FIG. 3. This ABS resin of raw material does not contain fillers or reinforcing materials, which impart characteristics such as strength, slide properties and flame resistance.

In addition, a label pasted on raw material is compatible with ABS resin; the base material thereof is Seventak #5990 (material: ABS film, thickness: 145 μm;

available from Kuramoto Sangyo Co.) and the coat material thereof Seventak #5993 (material: ABS laminate, thickness: 55 μm; available from Kuramoto Sangyo Co.). Detailed technical information of this label is disclosed in Japanese Patent Application Laid-open No. 8-67857 (1996).

In this embodiment, allowing for damage to an ABS resin, ink with a weak effect on resin specified by the label manufacturer was used as printing ink. Printing was 9-color printing (4 colors of gray base, 1 color of yellow base, 2 colors of cyan base and 2 colors of magenta base) by means of offset printing. The ink was stuck on the whole surface of a label when the printing of color of the base was included. Moreover, the weight of the cover case mentioned above was 389 g and the weight of the stuck label was 2 g. That is, mixing percentage of the label was 0.51%.

This raw material was crushed by the crusher 101 (JC-10, available from Morita Seiki Co., Ltd.) using a mesh screen of 6 mm.

The crushed material thus produced was subjected to washing and removal of washings by means of a washing and washings removal apparatus (Highchip Cleaner CFP-500, corresponding to reference numerals 110 and 113 in FIG. 4; available from Toyo Seiki Co., Ltd.). In this case, the raw material feeding rate was 2.5 kg per minute and the flow rate of the cleaning fluid W (tap water) was 80 liters per minute. The cleaning fluid W was received by the cleaning fluid tank 110 with a capacity of 2000 liters as shown in FIG. 5 and then was filtered in a filter housing (EBF112S6M, available from Lofler Corp.) using a nylon monofilament (Bag Filter R100NM012M, filtration precision: 100 μm, available from Lofler Corp.) for cyclic reuse by a pump not indicated in the figure.

The crushed material subjected to washing and washings removal was transported to an air classification aspirator system (KF-12, corresponding to reference numeral 123 in FIG. 4, available from Horai Co., Ltd.) by means of the air blower 114 (DF-5, available from Horai Co., Ltd.) and was classified into foreign matter of small bulk densities and crushed material.

The crushed material passed through the air classification aspirator system was loaded into a magnetic separator 126 (Magic Catch, residual magnetism: 1.3 teslas, available from JMI Corp.) and the ferromagnetic component thereof was classified.

Then, the crushed material was transported to a stock tank 129 by an air blower 127 (DF-1, available from Horai Co., Ltd.). The material was conveyed in an amount of about 3 kg per minute from this stock tank 129 to an eddy current type metal detection removal apparatus (MDS-30A, Sensor Technology Corp., corresponding to reference numeral 131 in FIG. 4) and the metal component thereof was removed and classified.

Only this washed, crushed material was made pellets and five pieces of specimens (in accordance with ASTM-D256, with 1/4 inch notches) for Izod impact testing were prepared using these pellets and the specimens were subjected to measurements of Izod impact strength.

In the pellet preparing step, the material was subjected to filtration by extrusion equipment (DMG40, available from Nippon Placon Corp.) with a filter of 60 meshes followed by melting, kneading and extrusion at a cylinder temperature of 210 °C. For a specimen for Izod impact testing, pellets of the aforementioned crushed material were used, which were prepared by injection molding at a cylinder temperature of 200 °C by means of an injection molder (IS-80G, available from Toshiba Machine Co., Ltd.) with a family mold for ASTM test pieces.

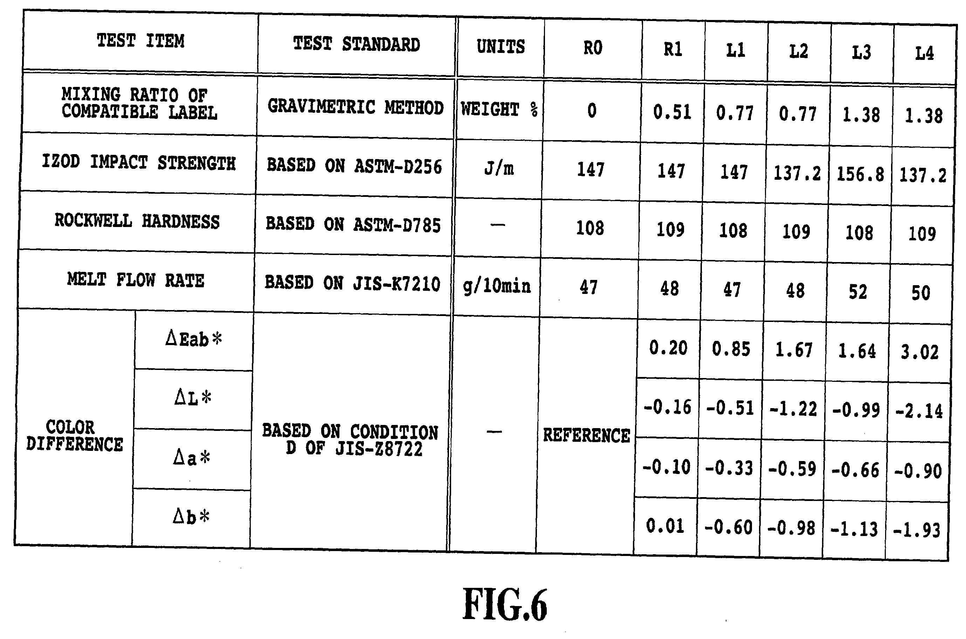

In addition, for this specimen, a test piece for Izod impact testing prepared by the virgin pellets was subjected to color difference measurement (in accordance with condition D, JIS-Z8722) as a color difference standard and similarly to five-time MFR measurements (in accordance with JIS-K7210; 220 °C, load 98.07 N). The results are given in the column R1 in FIG. 6.

Additionally, the color difference ΔEab*, defined in JIS-K7105, is calculated from the following equation.

$$\Delta Eab^* = [(\Delta L^*)^2 + (\Delta a^*)^2 + (\Delta b^*)^2]^{1/2}$$

Furthermore, the MFR mentioned above was measured in accordance with the JIS-K7210B methods. These methods are used to measure the extrusion rate when a melted thermoplastic is extruded through a specified length and diameter of a die (metal block with a mouthpiece for the shape) under specified temperature and pressure conditions. The B method of them is an automatic time measurement method applied to a material with a MFR of 0.50 to 300 g for 10 minutes.

As a testing apparatus, a totally automatic melt indexer available from Technol Seven Co., Ltd. (270 Model) was used with a die (resin extruding portion) of length 8.0137±0.025 mm and inside diameter φ2.092 ± 0.002 mm.

Into this testing apparatus was loaded 7 g of a sample (resin) for one time, which was dried under conditions of 80 °C × 2 hours. The sample was heated for 6 minutes at a temperature of 220 °C and then was extruded at a testing temperature of 220 °C with a testing load of 98.07 N (10 kgf). The time t seconds required for the displacement of 25.0 mm (designated by L) of the piston was measured to calculate a MFR as will be mentioned below.

In addition, the melt density ρ of the resin at the test temperature was 0.953 g/cm³.

$$\text{MFR (220, 98.07, B)} = 42.6 \times L \times \rho / t$$

$$= 42.6 \times 25.0 \times 0.953 / t$$

Prior to carrying out the aforementioned recycling step, the physical property values of the virgin pellets for material to be used were measured in advance. The results are tabulated in the column R0 in FIG. 6.

As can be seen from FIG. 6, when the values of R0 and R1 are compared, the Izod impact value remains the same and the MFR is decreased by 2.1%. In order to allow reprocessed plastic material to have the same performance as that of the virgin material, the Izod impact strength of the former needs to be 0.8 times or less that of the latter and the MFR of the former needs to be less than 1.2 times that of the latter. In this respect, the rates of change of the aforementioned physical property values sufficiently satisfy the properties as reprocessed plastic material.

Color difference was evaluated from the color deviation from a virgin pellet. For an ABS resin, color deviation that affects $\Delta b^*$ is particularly large and if $\Delta^* \leq 1.0$, the color can be complemented in the same step as that of the virgin material. In this embodiment, $\Delta Eab^* = 0.20$ and $\Delta b^* = 0.01$, and so there is almost no color change between processed material and virgin material.

The ink jet printer (BJ F600, available from Canon Inc.) as shown in FIGS. 1 and 2 is, at present, produced from plastic parts, all of which are made of virgin material, and is commercially available. A printer of which size and specifications are the same as those of this ink jet printer was produced using washed, crushed material obtained from the aforementioned recycling step. More specifically, the material was utilized for the cover case 12 (average thickness: 2 mm, weight: 389 g), the lower case 13 (average thickness: 2 mm, weight: 545 g), and the operating cover (average thickness: 2.3 mm, weight: 159 g).

These three parts were compared in appearance and color (hue, chroma and brightness) with parts made by the virgin material and no visual differences were found.

The weight of the outer case of BJ F600 containing this cover case 12 was 1093 g, the weight of an ABS label stuck thereon was 2 g, and the percentage of the weight of the label relative to the total weight of the outer case was 0.183%. As compared with the case of the aforementioned proof experiment, the weight ratio of label is decreased from 0.51% to 0.183%. Further, the tray 21, which holds printed sheets, is also made of the plastic material and only the aforementioned cover case 12 does not need to be recycled in another recycling step, which is reasonable in the consideration of the number of steps.

Therefore, the values of physical properties of the reprocessed plastic material made by utilizing the outer cover parts 12 to 14 of this ink jet printer 11 can be expected to be closer to those of the virgin material than those of the material obtained from the aforementioned recycling step.

Comparative Example 1

Raw material was subjected to recycling treatment as with the recycling step in the aforementioned embodiment, except that 2 g and 2.2 g of compatible ABS sheet materials were, respectively, stuck on the cover case 12 and the operating cover 14. The weight of the cover case 12 was 389 g, the weight of the operating cover 14 was 159 g, and the total weight of stuck labels was 4.2 g. That is, the mixing percentage of the labels was 0.77%.

The values of physical properties of this washed, crushed material were, under the same measurement conditions as those of virgin pellets, 147 J/m for the Izod impact value, 47 g/10 min for the MFR, and 0.85 for the color difference $\Delta Eab^*$. The measured values of the physical properties are given in the column L1 in the table in FIG. 6.

FIG. 6 shows that R0 and L1 are the same in both the Izod impact value and the MFR. The color differences are $\Delta Eab^* = 0.85$ and $\Delta b^* = -0.60$, suggesting that this combination is reprocessed plastic material that exhibits a performance equivalent to that of the case of the virgin material.

Comparative Example 2

Raw material was subjected to recycling treatment as with the recycling step in the aforementioned embodiment under the same conditions as those in Comparative Example 1 described above, with the exception that a polycarbonate resin (PC) sheet material, compatible with ABS, was used as the material of a label stuck on the operating cover 14 and that ink used for printing was made cyan-based. The mixing percentage of the labels was 0.77%, the same value as in the case of Comparative Example 1.

The values of physical properties of this washed, crushed material were, under the same measurement conditions as those of virgin pellets, 137.2 J/m for the Izod impact value, 48 g/10 min for the MFR, and 1.67 for the color difference $\Delta Eab^*$. The measured values of the physical properties are given in the column L2 in the table in FIG. 6.

As can be seen from FIG. 6, although the Izod impact value is increased by 6.7% and the MFR by 2% for the change from R0 to L2, the reprocessed plastic material can be said to have the same qualities in physical properties as those in the virgin material.

However, the color differences are $\Delta Eab^* = 1.67$ and $\Delta b^* = -0.98$, which shows no margin with respect to the criterion $\Delta b^* \leq 1.0$ and cannot completely satisfy $\Delta Eab^* \leq 1.0$.

Hence, from Comparative Examples 1 and 2, in order that the reprocessed plastic material is made to have qualities in physical properties equivalent to those in the virgin material, the mixing percentage of a label is allowable by 0.77%; however, in order that the reprocessed plastic material is made to have the same quality in color as that in the case of the virgin material, the mixing percentage of a label needs to be 0.77% or less, i. e., 0.51% or less.

Comparative Example 3

Raw material was subjected to recycling treatment as with the recycling step in the embodiment, except that 2.2 g of a compatible ABS sheet material was stuck on the operating cover 14. The weight of the operating cover 14 was 159 g and the mixing percentage of the label was 1.38%. In addition, the compatible ABS sheet material used is similar to one used in Comparative Example 1.

The values of physical properties of this washed, crushed material were, under the same measurement conditions as those of virgin pellets, 156.8 J/m for the Izod impact value, 52 g/10 min for the MFR, and 1.64 for the color difference $\Delta Eab^*$. The measured values of the physical properties are given in the column L3 in the table in FIG. 6.

As can be seen from the figure, although the Izod impact value is increased by 6.7% and the MFR by 10.6% for the change from R0 to L3, the washed, crushed material, as the reprocessed plastic material, can be said to have the same qualities in physical properties as those in the virgin material. While the color differences are $\Delta Eab^*= 1.64$ and $\Delta b^*= -1.13$, which shows no margin with respect to the criterion $\Delta b^* \leq 1.0$ and cannot completely satisfy $\Delta Eab^* \leq 1.0$.

This combination cannot be said to be reprocessed plastic material equivalent in performance to the virgin material.

Comparative Example 4

Raw material was subjected to recycling treatment as with the recycling step in the embodiment under the same conditions as in Comparative Example 3, except that 2.2 g of a compatible ABS sheet material similar to one used in Comparative Example 1 was stuck on the operating cover 14. The mixing percentage of the label was 1.38%, the same value as in the case of Comparative Example 3.

The values of physical properties of this washed, crushed material were, under the same measurement conditions as those of virgin pellets, 137.2 J/m for the Izod impact value, 50 g/10 min for the MFR, and 3.02 for the color difference $\Delta Eab^*$. The measured values of the physical properties are given in the column L4 in the table in FIG. 6.

As can be seen from FIG. 6, although the Izod impact value is decreased by 6.7% and the MFR is increased by 6.4% for the change from R0 to L4, the reprocessed plastic material can be said to have the same performance in physical properties as that in the virgin material.

However, the color differences are $\Delta Eab^*= 3.02$ and $\Delta b^*= -1.93$, and further $\Delta L^*= -2.14$, and so the color is not equivalent to that in the virgin material at all.

Hence, from Comparative Examples 3 and 4, in order that the reprocessed plastic material is made to have qualities in physical properties equivalent to those in the virgin material, the mixing percentage of a label is allowable by 1.38%; however, in order that the reprocessed plastic material is made to have the same quality in color as that in the case of the virgin material, the mixing percentage of a label needs to be 0.51% or less.

Use of thermoplastic molded parts, a compatible thermoplastic sheet material being stuck thereon, as reprocessed plastic material in the present invention eliminates the need for a step of removing labels in the recycling step of reprocessed plastic material, enables the simplification of the recycling step due to no adherence of paint used in silk screen printing, or the like, and enables the prevention of degradation in the physical properties and color of reprocessed plastic material to be obtained.

The quality of reprocessed plastic material can be maintained almost the same as that of the virgin material by making the Izod impact strength of the reprocessed plastic material 80% or more of that of the virgin material of the processed plastic material, as well as by making the melt flow rate 120% or less.

Reprocessed plastic material can be obtained without degrading its physical properties and color, even when the base is colored besides the base color of a sheet material, by making the weight of a compatible thermoplastic sheet material 0.5% or less of that of thermoplastic molded parts of the adherend of the sheet material, and by making arbitrary the ratio of the total inked surface area, the ink being used for printing, to the total surface area of the sheet material, in the surface area of the sheet material.

Ideal recycling can be carried out, by utilizing as raw material of reprocessed plastic material electrical and electronic equipment having a thermoplastic molded part, a compatible thermoplastic sheet material being stuck thereon, and molding the obtained, recycled plastic material thermoplastic parts of electrical and electronic equipment.

Fabrication of exterior parts of electrical and electronic equipment utilizing reprocessed plastic material can find extensive applications of reprocessed material without lowering the commercial value of the appearance even though reprocessed plastic material is used exceeding the values of physical properties of the material, in contrast to conventional thermal recycling or cascade recycling.

The present invention has been described in detail with respect to preferred embodiments, and it will now be that changes and modifications may be made without departing from the invention in its broader aspects, and it is the intention, therefore, in the appended claims to cover all such changes and modifications as fall within the true spirit of the invention.

**Claims**

1. Reprocessed plastic material using as raw material a thermoplastic molded part, **characterized in that** the thermoplastic molded part is made to stick thereon a thermoplastic sheet material compatible with a thermoplastic constituting the molded part.

2. The reprocessed plastic material according to claim 1, **characterized in that** the thermoplastic molded part as raw material is subjected to crushing, washing, drying subsequent to removal of the washings, and removing of solid matter exclusive of the thermoplastic, out of the crushed material, after drying, thereby producing the reprocessed plastic material.

3. The reprocessed plastic material according to claim 1 or 2 **characterized in that** the Izod impact strength of the reprocessed plastic material is 80% or more of that of the virgin material of the reprocessed plastic material and also the melt flow rate of the reprocessed plastic material is 120% or less.

4. The reprocessed plastic material according to any of claims 1 to 3, **characterized in that** the virgin material of thermoplastic material constituting the thermoplastic molded part is additionally used as raw material.

5. The reprocessed plastic material according to any of claims 1 to 4, **characterized in that** the thermoplastic molded part comprises any of a ABS resin, a PS resin and a PP resin.

6. The reprocessed plastic material according to any of claims 1 to 5, **characterized in that** the weight of the thermoplastic sheet material is 0.5% or less of that of the thermoplastic molded part, and
in the surface of the sheet material, the ratio of the total inked surface area, the ink being used for printing, to the total surface area of the sheet material is arbitrary.

7. The reprocessed plastic material according to claim 6, **characterized in that** the thermoplastic molded part is the part of electrical and electronic equipment.

8. Electrical and electronic equipment, **characterized in that** the electrical and electronic equipment is produced using the reprocessed plastic material according to any of claims 1 to 7.

9. The electrical and electronic equipment according to claim 8, **characterized in that** the electrical and electronic equipment produced using the reprocessed plastic material includes the exterior part of the electrical and electronic equipment.

10. A method for recycling plastic material, the raw material of the plastic material being the used product of the plastic molded part formed by sticking a compatible thermoplastic sheet material on the molded part mold-processed using plastic material; **characterized in that** the method comprises the steps of crushing, washing, drying, and foreign-matter removing of the used plastic molded part, thereby yielding reprocessed plastic material; and the Izod impact strength of the reprocessed plastic material is regulated within a specified range with respect to the Izod impact strength of the virgin material of the reprocessed plastic material.

11. The method for recycling the plastic material according to claim 10, **characterized in that** the Izod impact strength of the reprocessed plastic material is controlled to be 80% or more of that of the virgin material of the reprocessed plastic material.

12. The method for recycling the plastic material according to claim 10 or 11, **characterized in that** the weight of the thermoplastic sheet material is 0.5% or less of that of the molded part, and further in the surface of the sheet material, the ratio of the total inked surface area, the ink being used for printing, to the total surface area of the sheet material is arbitrary.

13. A process for manufacturing reprocessed plastic material, the raw material of the reprocessed plastic material being the thermoplastic molded part formed by sticking on the main body of a thermoplastic molded part a thermoplastic sheet material compatible with the plastic material of the main body, **characterized in that** the process comprises:

a crushing step of crushing the thermoplastic molded part by means of a mesh screen of 4 mm to 10 mm;
a washing step of washing the crushed material crushed in the crushing step using water as cleaning fluid in a crashed material to cleaning fluid ratio of 1 part to 10 parts or more;
a dehydrating step of dehydrating the crushed material washed in the washing step by means of a centrifugal dehydration method to cause the water content of the crushed material to be 0.30% by weight or less;

a foamed material removing step of removing a foamed material with a bulk density of 0.5 or more from the crushed material after the dehydration by means of air classification;

a foreign matter removing step of removing a solid material with a true density of 0.5 or more by means of specific gravity separation;

a first metal removing step of removing metals from the crushed material using a magnet with a residual magnetism of 1 tesla or larger; and further

a second metal removing step of removing metals from the crushed material using a metal detection removal apparatus;

the steps being carried out in the sequence described above in a continuous manner, thereby obtaining reprocessed raw material; as well as

a mixing step of sufficiently mixing the reprocessed raw material;

a recycling step of melting and kneading the mixed reprocessed raw material by means of an extruder to yield reprocessed material; and

a pellet producing step of causing the reprocessed material to be pellets;

the three steps being carried out in the sequence described above to obtain reprocessed plastic pellets.

14. The process for manufacturing reprocessed plastic material according to claim 13, **characterized in that**

the thermoplastic molded part is the part of electrical and electronic equipment.

15. The process for manufacturing reprocessed plastic material according to claim 13 or 14, **characterized in that**

the weight of the thermoplastic sheet material is 0.5% or less of that of the thermoplastic molded part; and further

in the surface of the sheet material, the ratio of the total inked surface area, the ink being used for printing, to the total surface area of the sheet material is arbitrary.

16. Reprocessed plastic material, **characterized in that**

the reprocessed plastic material is manufactured by the manufacturing process according to any of claims 13 to 15,

the Izod impact strength of the reprocessed plastic pellet is made 80% or more of that of the virgin material of the reprocessed plastic material, and also

the melt flow rate of the reprocessed plastic pellet is made 120% or less.

**FIG.1**

**FIG.2**

15

Photo

# FIG.3

**FIG.4**

**FIG.5**

| TEST ITEM | | TEST STANDARD | UNITS | R0 | R1 | L1 | L2 | L3 | L4 |
|---|---|---|---|---|---|---|---|---|---|
| MIXING RATIO OF COMPATIBLE LABEL | | GRAVIMETRIC METHOD | WEIGHT % | 0 | 0.51 | 0.77 | 0.77 | 1.38 | 1.38 |
| IZOD IMPACT STRENGTH | | BASED ON ASTM-D256 | J/m | 147 | 147 | 147 | 137.2 | 156.8 | 137.2 |
| ROCKWELL HARDNESS | | BASED ON ASTM-D785 | — | 108 | 109 | 108 | 109 | 108 | 109 |
| MELT FLOW RATE | | BASED ON JIS-K7210 | g/10min | 47 | 48 | 47 | 48 | 52 | 50 |
| COLOR DIFFERENCE | $\Delta Eab*$ | BASED ON CONDITION D OF JIS-Z8722 | — | REFERENCE | 0.20 | 0.85 | 1.67 | 1.64 | 3.02 |
| | $\Delta L*$ | | | | -0.16 | -0.51 | -1.22 | -0.99 | -2.14 |
| | $\Delta a*$ | | | | -0.10 | -0.33 | -0.59 | -0.66 | -0.90 |
| | $\Delta b*$ | | | | 0.01 | -0.60 | -0.98 | -1.13 | -1.93 |

## FIG.6

EP 1 271 455 A1

**European Patent Office**

## EUROPEAN SEARCH REPORT

Application Number

EP 02 01 3839

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| E,L | EP 1 226 913 A (CANON KK) 31 July 2002 (2002-07-31) * page 7, line 25-34; figures 1-5 * | 1-16 | G09F3/10 B29B17/00 |
| L,X | EP 1 055 500 A (CANON KK) 29 November 2000 (2000-11-29) * column 21, line 28-52; figures 1-5 * | 1-16 | |
| A | US 6 080 473 A (GAA PETER C  ET AL) 27 June 2000 (2000-06-27) * figure 1 * | 1-16 | |
| X | US 6 124 014 A (TANI TATSUO  ET AL) 26 September 2000 (2000-09-26) * abstract * | 1 | |
| X | US 6 117 263 A (KONDO HIROTAKA) 12 September 2000 (2000-09-12) * abstract * | 1 | |
| | | | TECHNICAL FIELDS SEARCHED (Int.Cl.7) |
| | | | G09F B29B |

The present search report has been drawn up for all claims

| Place of search | Date of completion of the search | Examiner |
|---|---|---|
| MUNICH | 10 September 2002 | Kofoed, J |

**ANNEX TO THE EUROPEAN SEARCH REPORT
ON EUROPEAN PATENT APPLICATION NO.**

EP 02 01 3839

This annex lists the patent family members relating to the patent documents cited in the above-mentioned European search report.
The members are as contained in the European Patent Office EDP file on
The European Patent Office is in no way liable for these particulars which are merely given for the purpose of information.

10-09-2002

| Patent document cited in search report | | Publication date | Patent family member(s) | | Publication date |
|---|---|---|---|---|---|
| EP 1226913 | A | 31-07-2002 | EP | 1226913 A1 | 31-07-2002 |
| EP 1055500 | A | 29-11-2000 | JP<br>EP | 2001030248 A<br>1055500 A2 | 06-02-2001<br>29-11-2000 |
| US 6080473 | A | 27-06-2000 | AU<br>BR<br>CN<br>EP<br>JP<br>TW | 1951500 A<br>0000340 A<br>1281780 A<br>1036651 A1<br>2000313048 A<br>464601 B | 21-09-2000<br>17-10-2000<br>31-01-2001<br>20-09-2000<br>14-11-2000<br>21-11-2001 |
| US 6124014 | A | 26-09-2000 | DE<br>GB<br>JP | 19630104 A1<br>2315488 A ,B<br>8340182 A | 29-01-1998<br>04-02-1998<br>24-12-1996 |
| US 6117263 | A | 12-09-2000 | JP | 11077854 A | 23-03-1999 |

For more details about this annex : see Official Journal of the European Patent Office, No. 12/82